# EUROPEAN PATENT APPLICATION

(11) **EP 3 115 538 A1**
(43) Date of publication of application: **11.01.2017**
(21) Application number: 16178651.2
(22) Date of filing: 08.07.2016
(51) Int. Cl.: E05F 15/659

(54) **DRIVE APPARATUS**

(30) Priority: 08.07.2015 JP 2015137168
(71) Applicant: Aisin Seiki Kabushiki Kaisha, Kariya-shi Aichi-ken, 448-8650 (JP)
(72) Inventor: KATSURA, Shintaro, Kariya-shi, Aichi-ken, 448-8650 (JP); FUKADA, Ryuuta, Kariya-shi, Aichi-ken, 448-8650 (JP); BESSHO, Nobuyasu, Kariya-shi, Aichi-ken, 448-8650 (JP); NAGASE, Koji, Kariya-shi, Aichi-ken 448-8650 (JP); MATSUOKA, Koji, Kariya-shi, Aichi-ken, 448-8650 (JP)
(74) Representative: Intès, Didier Gérard André

(57) **Abstract**

A drive apparatus includes: an electric motor (15); a drive member (21); a transmission mechanism (17) through which the electric motor and the drive member are connected to each other; a rotation sensor (53) that detects the rotational position of the electric motor; a starting position setting unit (50) that sets the rotational position which is detected in a motor lock state in which the rotation of the electric motor is limited, as a starting position corresponding to a mechanical lock state of the drive member; a voltage sensor (54) that detects the voltage (V) of an electric power source which supplies electric power to the electric motor (15); and a starting position correcting unit (50) that corrects the set starting position by an amount of correction which increases as the detected voltage increases.

## Description

### TECHNICAL FIELD

This disclosure relates to a drive apparatus.

### BACKGROUND DISCUSSION

As a drive apparatus in the related art, an opening and closing control apparatus for an opening cover member disclosed in JP 2009-262930A (Reference 1) is known. Position detection means of the opening and closing control apparatus determines the direction of movement of a cover member (drive member) and detects the position of the cover member based on pulse signals having different phases from at least a pair of rotational speed sensors. If the reversal of the cover member is detected despite that a reverse instruction to reverse the cover member has not been output to an electric motor, pulse signals used for detecting the reversal are processed as noise. As a result, it is possible to detect an accurate position of the cover member.

In order to detect the operation state of the drive member (detect the position of the cover member), typically, the rotational position of the electric motor, which corresponds to a predetermined operational state of the drive member, is set as a starting position in advance, and a deviation of the rotational position from the starting position is used. Specifically, the rotational position of the electric motor, when the drive member is in a so-called mechanical lock state in which the operation of the drive member is mechanically limited, is set as a starting position.

Even if the drive member is in a mechanical lock state, the electric motor may continuously turn due to the bending of a transmission mechanism through which the drive member and the electric motor are connected to each other, the reduction of a backlash of the transmission mechanism, or the like, and the starting position may be offset from an original rotational position corresponding to the mechanical lock state. The degree of offset of the starting position of the electric motor changes according to torque of the electric motor.

### SUMMARY

Thus, a need exists for a drive apparatus capable of more accurately setting the starting position of an electric motor which corresponds to a mechanical lock state of a drive member.

A drive apparatus according to an aspect of this disclosure includes: an electric motor; a drive member; a transmission mechanism through which the electric motor and the drive member are connected to each other; a rotation sensor for detecting the rotational position of the electric motor; a starting position setting unit for setting the rotational position which is detected in a motor lock state in which the rotation of the electric motor is limited, as a starting position corresponding to a mechanical lock state of the drive member; a voltage sensor for detecting the voltage of an electric power source which supplies electric power to the electric motor; and a starting position correcting unit for correcting the set starting position by an amount of correction which increases as the detected voltage increases.

In this configuration, the starting position correcting unit corrects the starting position, which is set by the starting position setting unit, by the amount of correction which increases as the detected voltage increases, that is, the amount of correction which increases as the torque of the electric motor increases. Typically, even if the drive member is mechanically locked, the electric motor continuously rotates due to the bending of the drive member or the transmission mechanism, the reduction of a backlash of the transmission mechanism, or the like. That is, even if the drive member is mechanically locked, motor lock does not immediately occur, and an offset occurs between an original rotational position, which corresponds to the mechanical lock state of the drive member, and the starting position set by the starting position setting unit. The degree of offset increases as the torque of the electric motor increases. It is possible to reduce the degree of offset by correcting the set starting position by the amount of correction, which increases as the detected voltage increases (that is, as the torque of the electric motor increases), via the starting position correcting unit. As a result, it is possible to more accurately set the starting position of the electric motor which corresponds to the mechanical lock state of the drive member.

It is preferable that the drive apparatus according to the aspect of this disclosure further includes a temperature sensor for detecting the temperature of the electric motor, and the starting position correcting unit is further configured to correct the set starting position by an amount of correction which increases as the detected temperature decreases.

Typically, the degree of offset between the original rotational position, which corresponds to the mechanical lock state of the drive member, and the starting position, which is set by the starting position setting unit, increases as the detected temperature decreases, that is, by as the torque of the electric motor increases. In this configuration, it is possible to reduce the degree of offset by further correcting the set starting position by the amount of correction, which increases as the detected temperature decreases (that is, as the torque of the electric motor increases), via the starting position correcting unit. As a result, it is possible to more accurately set the starting position of the electric motor which corresponds to the mechanical lock state of the drive member.

According to the aspect of this disclosure, it is possible to more accurately set the starting position of an electric motor which corresponds to a mechanical lock state of a drive member.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view illustrating a roof to which a drive apparatus of an embodiment is applied;
Fig. 2 is a top view illustrating the structure of the drive apparatus of the embodiment;
Fig. 3 is a block diagram illustrating the electric configuration of the drive apparatus of the embodiment;
Fig. 4 is a flowchart illustrating a control mode of the drive apparatus of the embodiment; and
Fig. 5 is a graph illustrating a relationship between a voltage and torque relative to temperature characteristics.

### DETAILED DESCRIPTION

Hereinafter, an embodiment of a drive apparatus will be described. Hereinafter, a forward and rearward direction of a vehicle is referred to as a "forward and rearward direction".

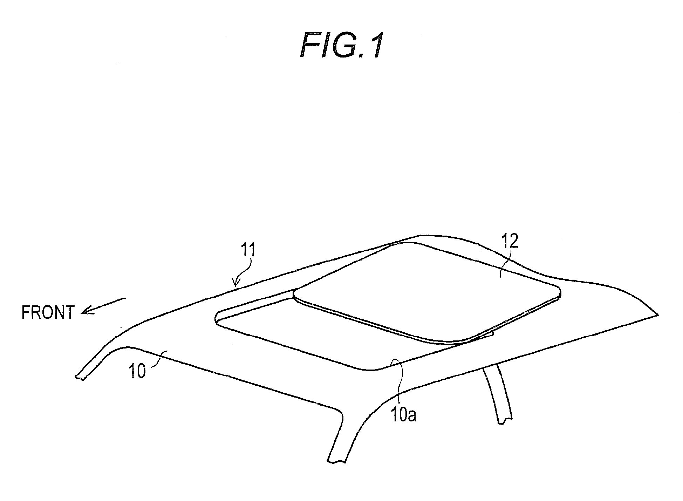

As illustrated in Fig. 1, a substantially rectangular opening 10a is formed in a roof 10 of a vehicle such as an automobile, and a sunroof apparatus 11 is mounted on the roof 10. The sunroof apparatus 11 includes a substantially rectangular movable panel 12 made of a glass plate or the like which opens and closes the opening 10a by moving in the forward and rearward direction.

Hereinafter, the structure of the sunroof apparatus 11 related to the opening and closing of the movable panel 12 will be described.

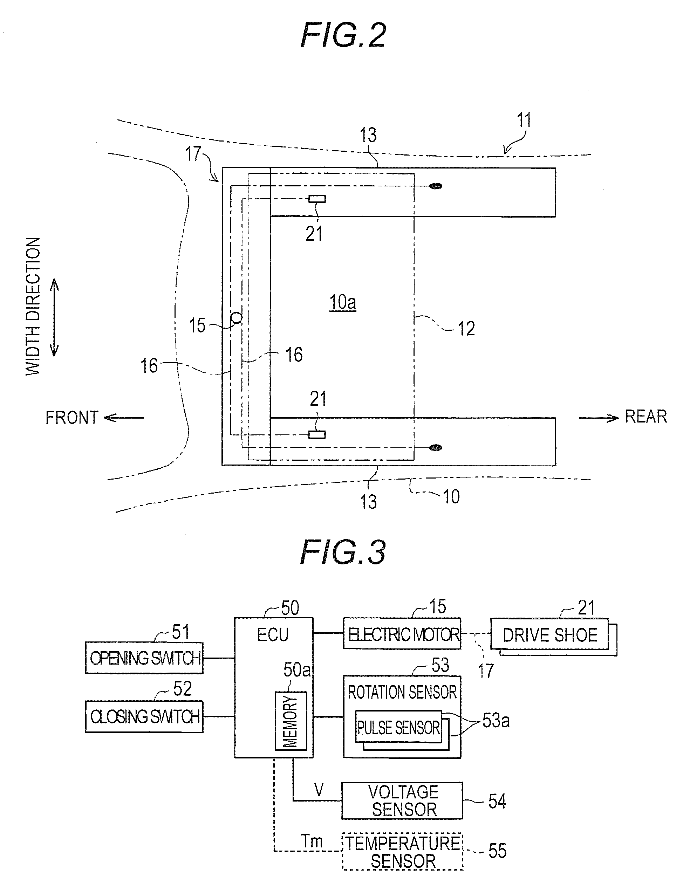

As illustrated in Fig. 2, a pair of guide rails 13 are respectively disposed in both edge portions of the opening 10a in a width direction of the vehicle. Each of the guide rails 13 extends substantially in the forward and rearward direction. A drive shoe 21 is guided and supported by each of the guide rails 13 such that the drive shoe 21 is capable of moving along an extension direction of the guide rails. The movable panel 12 is linked to and supported by both the drive shoes 21 which are drive members, in a state where the movable panel 12 is bridged between the drive shoes 21. Both the drive shoes 21 open and close the movable panel 12 with the movement of both the drive shoes 21 along the extension direction (forward and rearward direction) of the guide rails 13.

An electric motor 15, for example, which is a DC motor, is installed in front of both the guide rails 13 of the vehicle. A rotational shaft of the electric motor 15 is provided with a speed reduction mechanism that reduces and transmits the rotational speed of the rotational shaft to an output gear. A pair of substantially belt-shaped drive belts 16 mesh with the output gear. Both the drive belts 16 are respectively connected to the drive shoes 21. The electric motor 15 rotates and simultaneously moves both the drive shoes 21 along the extension direction of the guide rails 13. Both the drive belts 16 together with the output gear and the speed reduction mechanism form a transmission mechanism 17.

During the opening and closing of the movable panel 12, if both the drive shoes 21 move further in the forward and rearward direction after the movable panel 12 has reached a fully open state or a fully closed state, the movement of the drive shoes 21 is directly or indirectly limited, and mechanical lock occurs. Specifically, when both the drive shoes 21 or a member (the movable panel 12 or the like) operated integrally with both the drive shoes 21 come into contact with a peripheral component, a dedicated stopper, or the like, mechanical lock occurs.

Hereinafter, the electric configuration of the embodiment will be described.

As illustrated in Fig. 3, an electronic control unit (ECU) 50 is mainly formed of a micro controller (MCU), and is electrically connected to the electric motor 15. The ECU 50 is electrically connected to an opening switch 51 and a closing switch 52 which are installed in a passenger compartment (dashboard or the like). If a user operates the opening switch 51 and the closing switch 52, the opening switch 51 and the closing switch 52 respectively output an operational signal indicating that the movable panel 12 is to be opened, and an operational signal indicating that the movable panel 12 is to be closed. The ECU 50 controls the driving of the electric motor 15 so as to open the movable panel 12, based on an operational signal from the opening switch 51, or the ECU 50 controls the driving of the electric motor 15 so as to close the movable panel 12, based on an operational signal from the closing switch 52. When the electric motor 15 rotates in a forward direction and a reverse direction, the drive shoes 21 move toward the rear and the front of the vehicle.

The ECU 50 is electrically connected to a rotation sensor 53. A pair of pulse sensors 53a are built into the rotation sensor 53. Both the pulse sensors 53a respectively output a pair of pulse signals having different phases with the rotation of the electric motor 15. The ECU 50 detects the rotational direction (forward direction or reverse direction), the amount of rotation, and a rotational speed N of the electric motor 15 based on both the pulse signals. The ECU 50 detects a current position P of the drive shoes 21 based on the rotational direction and the amount of rotation of the electric motor 15.

Particularly, the ECU 50 detects motor lock in which the rotation of the electric motor 15 is limited, based on when the rotational speed N of the electric motor 15 becomes zero. The motor lock is caused by mechanical lock of both the drive shoes 21. For example, the ECU 50 sets the rotational position of the electric motor 15 when motor lock is detected, as a starting position (starting position setting unit). The reason for this is to ascertain an opening and closing state (posture and the like) of the movable panel 12 based on the rotational position (the amount of rotation from the starting position) of the electric motor 15 which is measured relative to the starting position. Another reason for this is to ascertain the starting position in advance such that mechanical lock does not occur whenever the movable panel 12 reaches the fully open state or the fully closed state during the typical opening and closing of the movable panel 12. In other words, the setting of a starting position is a process that is performed during initial setting before a vehicle is shipped out of a vehicle factory, or after an on-board battery is replaced.

The ECU 50 is electrically connected to a voltage sensor 54 that detects the voltage V of a battery, that is, an electric power source that supplies electric power to the electric motor 15. The ECU 50 corrects the set starting position based on a voltage V that has been detected in advance prior to setting the starting position. The reason for this is that typically, even if both the drive shoes 21 are mechanically locked, the electric motor 15 continuously rotates due to the bending of both the drive shoes 21 or the transmission mechanism 17, the reduction of a backlash of the transmission mechanism 17, or the like, and an offset occurs between the set starting position and an original rotational position corresponding to a mechanical lock state of both the drive shoes 21. The degree of offset increases as the torque of the electric motor 15 increases.

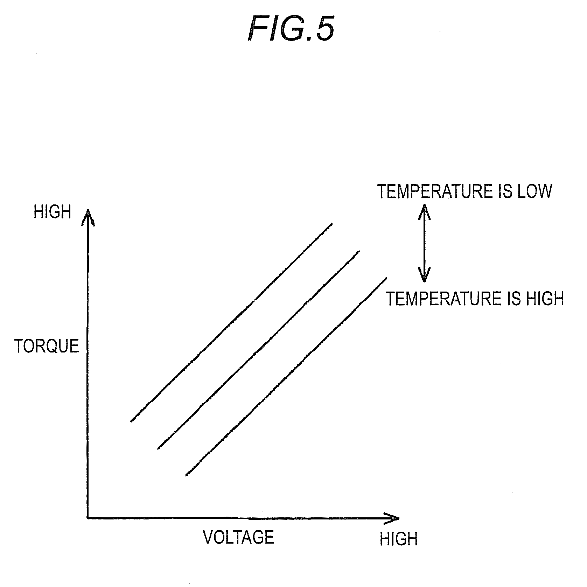

Fig. 5 is a graph illustrating a relationship between the voltage V and the torque of the electric motor 15. As is apparent from Fig. 5, since the torque of the electric motor 15 increases as the voltage V increases, naturally, the degree of offset increases as the voltage V increases. In order to reduce the degree of offset between the set starting position and the original rotational position corresponding to the mechanical lock state of both the drive shoes 21, the ECU 50 corrects the starting position while taking such a characteristic into consideration, and stores the corrected amount of offset in a built-in memory 50a (starting position correcting unit). In this case, needlessly to say, the amount of correction increases as the voltage V increases, that is, as the torque of the electric motor 15 increases.

Hereinafter, a mode of setting and correcting the starting position of the electric motor 15, which is performed by the ECU 50, will be described. This routine is started up during initial setting before a vehicle is shipped out of a vehicle factory, or after an on-board battery is replaced.

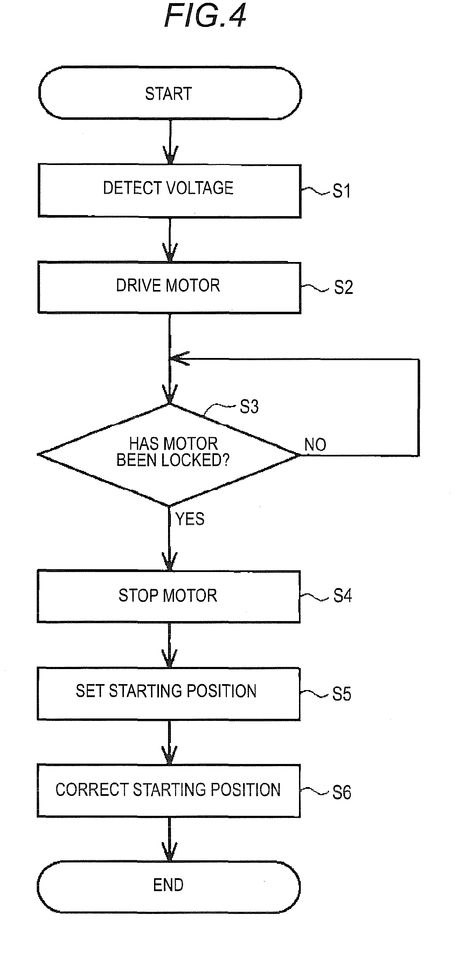

As illustrated in Fig. 4, if the process proceeds to this routine, the ECU 50 detects the current voltage V in Step S1. The ECU 50 proceeds to Step S2. For example, the ECU 50 drives the rotation of the electric motor 15 so as to move both the drive shoes 21 toward a fully closed position of the movable panel 12. In Step S3, the ECU 50 determines whether motor lock has occurred, waits until it is determined that motor lock has occurred, and proceeds to Step S4, and stops driving the rotation of the electric motor 15.

Subsequently, in Step S5, the ECU 50 sets the rotational position of the electric motor 15 when the motor lock has occurred, as an interim starting position. In Step S6, the ECU 50 stores a new starting position, which is obtained by correcting the interim starting position by the amount of correction calculated according to the voltage V, in the built-in memory 50a. Thereafter, the process is ended. Needless to say, the interim starting position is corrected in a direction, which is reverse to the rotational direction of the electric motor 15 when the motor lock has occurred, by the amount of correction.

As described above, according to the embodiment, it is possible to obtain the following operational effects.
(1) In the embodiment, in Step S6, the starting position set in Step S5 is corrected by the amount of correction which increases as the voltage V increases, that is, the amount of correction which increases as the torque of the electric motor 15 increases. Typically, even if both the drive shoes 21 are mechanically locked, the electric motor 15 continuously rotates due to the bending of both the drive shoes 21 or the transmission mechanism 17, the reduction of a backlash of the transmission mechanism 17, or the like. That is, even if both the drive shoes 21 are mechanically locked, motor lock does not immediately occur, and an offset occurs between the set starting position set in Step S5 and the original rotational position corresponding to the mechanical lock state of both the drive shoes 21. The degree of offset increases as the torque of the electric motor 15 increases. It is possible to reduce the degree of offset by correcting the set starting position by the amount of correction which increases as the voltage V increases (that is, as the torque of the electric motor 15 increases) in Step S6. As a result, it is possible to more accurately set the starting position of the electric motor 15 which corresponds to the mechanical lock state of both the drive shoes 21.
(2) In the embodiment, the starting position of the electric motor 15 is more accurately set, and thus, it is possible to ascertain the position of both the drive shoes 21 in the forward and rearward direction which corresponds to the rotational position of the electric motor 15 which is measured relative to the starting position, or it is possible to more accurately ascertain the operational state of the movable panel 12. In typical usage conditions, for example, it is possible to prevent both the drive shoes 21 from moving until both the drive shoes 21 are mechanically locked, and it is possible to prevent an overload from unnecessarily being applied to the drive shoes 21 or peripheral components.

The following changes may be made to the embodiment.

As illustrated in Fig. 5, generally, the torque of the electric motor 15 decreases as the temperature of the electric motor 15 increases. In contrast, the torque of the electric motor 15 increases as the temperature of the electric motor 15 decreases. That is, the degree of offset between the set starting position and the original rotational position corresponding to the mechanical lock state of both the drive shoes 21 increases as the temperature of the electric motor 15 decreases, that is, as the torque of the electric motor 15 increases. As illustrated in Fig. 3, the ECU 50 may be electrically connected to a temperature sensor 55 that detects a temperature Tm of the electric motor 15. In this case, the ECU 50 may further correct the set starting position (in Step S5) based on the temperature Tm that has been detected in advance prior to setting the starting position (Step S6) (starting position correcting unit). Specifically, the ECU 50 corrects the set starting position by the amount of correction which increases as the temperature Tm decreases, that is, as the torque of the electric motor 15 increases.

Owing to these changes, it is possible to more accurately set the starting position of the electric motor 15 which corresponds to the mechanical lock state of both the drive shoes 21, in addition to obtaining the same effects as those of the embodiment.

The ECU 50 may decrease the amount of correction of the starting position in a stepwise manner according to the temperature Tm. That is, "the amount of correction which increases as the detected temperature decreases" is not limited to the amount of correction which strictly monotonically increases according to a decrease in the temperature Tm, and may be the amount of correction which monotonically decreases according to a decrease in the temperature Tm.

In the embodiment, the ECU 50 may increase the amount of correction of the starting position in a stepwise manner according to the voltage V. That is, "the amount of correction which increases as in the detected voltage increases" is not limited to the amount of correction which strictly monotonically increases according to an increase in the voltage V, and may be the amount of correction which monotonically increases according to an increase in the voltage V.

In the embodiment, in a case where both the drive shoes 21 move toward the fully closed position of the movable panel 12, the starting position of the electric motor 15 is set. Instead of that case or in addition to that case, in a case where both the drive shoes 21 move toward a fully open position of the movable panel 12, the starting position of the electric motor 15 may be set. Alternatively, in a type of sunroof apparatus in which motor lock normally occurs at a switching timing (for example, the timing of switching between a tilt operation and a slide operation) of an operation mode of the movable panel 12, the starting position of the electric motor 15 may be set at that timing.

This disclosure may be applied to a shade panel as a drive member which is driven by an electric motor, and an operation member (garnish) as a drive member which unwinds a sheet of a roll shade. Alternatively, this disclosure may be applied to a swing door, a slide door, a trunk lid, a glass window, or the like as a drive member which is driven by an electric motor. Alternatively, this disclosure may be applied to an arbitrary drive member driven by an electric motor.

A transmission mechanism, through which such a drive member and the electric motor are connected to each other, is arbitrarily adopted. A link mechanism, a cam mechanism, a gear mechanism, a cable (rope or belt) transmission mechanism, a screw mechanism, a combination of these mechanisms, or the like may be suitably adopted.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A drive apparatus **characterized by** comprising:
an electric motor (15);
a drive member (21);
a transmission mechanism (17) through which the electric motor and the drive member are connected to each other;
a rotation sensor (53) for detecting the rotational position of the electric motor;
a starting position setting unit (50) for setting the rotational position which is detected in a motor lock state in which the rotation of the electric motor is limited, as a starting position corresponding to a mechanical lock state of the drive member;
a voltage sensor (54) for detecting the voltage (V) of an electric power source which supplies electric power to the electric motor (15); and
a starting position correcting unit (50) for correcting the set starting position by an amount of correction which increases as the detected voltage increases.

2. The drive apparatus according to claim 1, further comprising:
a temperature sensor (55) for detecting the temperature (Tm) of the electric motor (15),
wherein the starting position correcting unit (50) is further configured to correct the set starting position by an amount of correction which increases as the detected temperature decreases.
